# EUROPÄISCHE PATENTSCHRIFT

(11) **EP 4 506 115 B1**
(45) Veröffentlichungstag und Bekanntmachung des Hinweises auf die Patenterteilung: **21.01.2026**
(21) Anmeldenummer: 23190664.5
(22) Anmeldetag: 09.08.2023
(51) Int. Cl.: B25J 11/00, B23P 19/06, B25J 15/00, B25J 19/06

(54) **KOLLISIONSSCHUTZHÜLLE FÜR EIN WERKZEUG EINES KOLLABORIERENDEN ROBOTERS**
COLLISION PROTECTION SHROUD FOR A TOOL OF A COLLABORATING ROBOT
ENVELOPPE DE PROTECTION CONTRE LES COLLISIONS POUR UN OUTIL D'UN ROBOT COLLABORANT

(43) Veröffentlichungstag der Anmeldung: 12.02.2025
(73) Patentinhaber: ZKW Group GmbH, 3250 Wieselburg (AT)
(72) Erfinder: Jackl, Robert, 3244 Ruprechtshofen (AT)
(74) Vertreter: Patentanwaltskanzlei Matschnig & Forsthuber OG

(56) Entgegenhaltungen:
- DE-A1- 102020 127 488
- US-A1- 2020 189 119

## Beschreibung

Die Erfindung betrifft eine Kollisionsschutzhülle für ein Werkzeug eines kollaborierenden Roboters, wobei die Kollisionsschutzhülle vorgesehen ist, eine Schraube federnd zu halten und bei einem Ausdrücken der Schraube aus der Kollisionsschutzhülle freizugeben, wobei sich die Kollisionsschutzhülle entlang einer Längsachse erstreckt und Folgendes umfasst:
- ein Mundstück zur federnden Halterung einer Schraube,
- einen Zuführabschnitt zum Zuführen der Schraube zum Mundstück, wobei der Zuführabschnitt eine Einführöffnung zum Einführen der Schraube in den Zuführabschnitt und eine Übergangsöffnung zum Überführen der Schraube vom Zuführabschnitt in das Mundstück umfasst, wobei die Schraube entlang der Längsachse in Richtung einer Zuführrichtung in den Zuführabschnitt über die Einführöffnung einführbar ist,

wobei der Zuführabschnitt und das Mundstück entlang der Längsachse der Kollisionsschutzhülle unmittelbar aneinander anschließen und die Kollisionsschutzhülle bilden, wobei das Mundstück durch elastische Zungen gebildet ist, die am Umfang der Übergangsöffnung des Zuführabschnitts angeordnet sind und sich entlang der Längsachse der Kollissionsschutzhülle in Richtung Zuführrichtung erstrecken, wobei die elastischen Zungen eingerichtet sind, sich beim Ausdrücken der Schraube in Richtung der Zuführrichtung aus dem Mundstück in Richtung der Zuführrichtung derart elastisch zu verformen, dass die Schraube freigegeben werden kann und die elastischen Zungen anschließend in ihre Ursprungsposition zurückkehren und wobei die elastischen Zungen eingerichtet sind, sich bei einer äußeren Krafteinwirkung
   - entgegen der Zuführrichtung, und
   - quer zur Längsachse der Kollisionsschutzhülle
zu verformen und bei Wegfallen der äußeren Krafteinwirkung in ihre Ursprungsposition zurückzukehren.

Weiters betrifft die Erfindung ein Werkzeug für einen kollaborierenden Roboter, umfassend zumindest eine erfindungsgemäße Kollisionsschutzhülle.

Die Automatisierung von Montagetätigkeiten schreitet sehr schnell voran und wird zukünftig einen noch höheren Stellenwert haben. Einerseits gilt es, durch Automatisierungsmaßnahmen die Effizienz von diversen Montagearbeiten zu verbessern und andererseits eine immer schnellere sowie möglichst fehlerfreie Assemblierung von zu montierenden Komponenten zu erreichen. Zunehmend werden Arbeitsplätze geschaffen, bei denen Roboter und Menschen als Bedienpersonal im gleichen Arbeitsraum am gleichen Arbeitsplatz am selben Werkstück zusammenarbeiten.

Aus dem Stand der Technik sind bereits zahlreiche Ausführungen von Überlast- und Kollisionsschutzvorrichtungen für einen Roboter bekannt, die meist zwischen dem Roboter und einem vom Roboter zu verwendendem Werkzeug, das an einer Werkzeugaufnahme des Roboters befestigt ist, angeordnet sind, um Beschädigungen zu verhindern, wenn das Werkzeug auf ein Hindernis trifft. Beispielsweise sind aus den Dokumenten DE 199 25 688 A1, DE 103 91 972 T5 und DE 36 05 505 A1 bereits verschiedene Ausführungsformen von Überlast-Schutzeinrichtungen bekannt.

Aus dem Stand der Technik ist ebenso die EP 3 782 773 A1 bekannt. Dort ist zum Ausdrücken der Schraube aus dem Mundstück ein mechanischer Mechanismus notwendig, wobei das Mundstück aus Backen gebildet ist, welche jeweils mittels einer Welle und einer Backenfeder federnd an dem Zuführabschnitt gelagert sind. Beim Ausdrücken der Schraube wird eine Kraft aufgewendet, welche die einzelnen Backen auseinanderdrücken. Sobald die Schraube ausgedrückt ist, werden die Backen durch die einzelnen Backenfedern wieder in ihre Ursprungsposition positioniert. Ein solcher Mechanismus ist allerdings in der Fertigung schwierig herzustellen und erfordert zudem mehrere Einzelteile.

Ebenso zeigt die DE 10 2020 127488 A1 eine Kollisionsschutzhülle aus dem Stand der Technik. Es ist daher eine Aufgabe der Erfindung eine Kollisionsschutzhülle bereitzustellen, welche die Nachteile aus dem Stand der Technik überwindet.

Diese Aufgabe wird mit dem Kennzeichen des Anspruchs 1 gelöst.

Es kann vorgesehen sein, dass die elastischen Zungen sich ausgehend von der Übergangsöffnung und entlang der Längsachse verjüngen.

Es kann vorgesehen sein, dass die elastischen Zungen einen Hohlraum bilden, in welche die Schraube einführbar ist, wobei sich der Hohlraum ausgehend von der Übergangsöffnung entlang der Längsachse in Richtung der Zuführrichtung verjüngt, sodass ein Schraubkopf der Schraube von den elastischen Zungen federnd gehalten werden kann.

Es kann vorgesehen sein, dass die Kollisionsschutzhülle einstückig hergestellt ist.

Es kann vorgesehen sein, dass die Übergangsöffnung im Wesentlichen kreisförmig ist.

Es kann vorgesehen sein, dass die elastischen Zungen sich beim Ausdrücken der Schraube in Richtung der Zuführrichtung aus dem Mundstück derart quer zur Zuführrichtung elastisch zu verformen, dass die Schraube freigegeben werden kann und die elastischen Zungen anschließend in ihre Ursprungsposition zurückkehren.

Es kann vorgesehen sein, dass die elastischen Zungen derart ausgeformt sind, dass zwischen zwei benachbarten elastischen Zungen ein Zwischenraum gebildet ist, wobei der Zwischenraum am Anschluss an dem Zuführabschnitt im Wesentlichen eine kreisförmige Öffnung aufweist, welche in Richtung Zuführrichtung in einen Spalt mündet.

Dadurch können Spannungsspitzen bei der elastischen Verformung der elastischen Zungen vermieden werden.

Die Aufgabe wird ebenso gelöst durch ein Werkzeug für einen kollaborierenden Roboter, umfassend zumindest eine erfindungsgemäße Kollisionsschutzhülle.

### Figurenbeschreibung

Nachfolgend wird die Erfindung anhand von beispielhaften Zeichnungen näher erläutert. Hierbei zeigt
- Fig. 1: eine seitliche Ansicht einer beispielhaften Kollisionsschutzhülle, welche einen Zuführabschnitt und ein Mundstück umfasst, welche unmittelbar aneinander anschließen, wobei eine Schraube in einer Zuführrichtung dem Mundstück zuführbar ist;
- Fig. 2: eine perspektivische Ansicht der Kollisionsschutzhülle aus Fig. 1;
- Fig. 3: eine stirnseitige Ansicht der Kollisionsschutzhülle aus Fig. 1 entgegen der Zuführrichtung; und
- Fig. 4: eine perspektivische Ansicht eines beispielhaften Werkzeugs für kollaborierende Roboter, umfassend die Kollisionsschutzhülle aus Fig. 1.

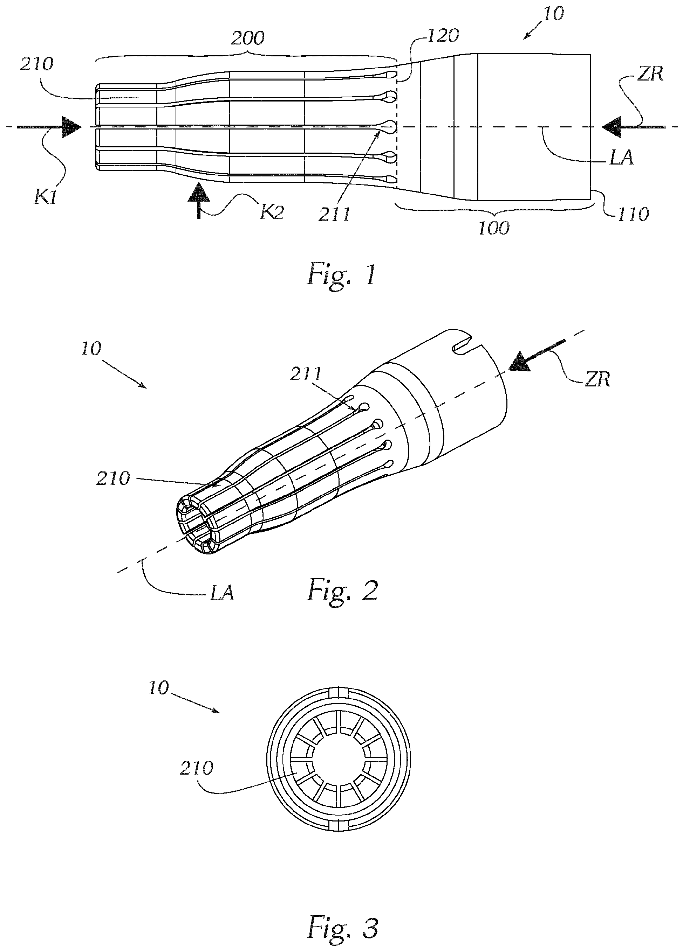

**Fig. 1** zeigt eine beispielhafte Kollisionsschutzhülle **10** für ein Werkzeug eines kollaborierenden Roboters, wobei die Kollisionsschutzhülle **10** vorgesehen ist, eine Schraube federnd zu halten und bei einem Ausdrücken der Schraube aus der Kollisionsschutzhülle **10** freizugeben, wobei sich die Kollisionsschutzhülle **10** entlang einer Längsachse **LA** erstreckt.

Die Kollisionsschutzhülle **10** umfasst ein Mundstück **200** zur federnden Halterung einer Schraube, sowie einen Zuführabschnitt **100** zum Zuführen der Schraube zum Mundstück **200.** Der Zuführabschnitt **100** umfasst eine Einführöffnung **110** zum Einführen der Schraube in den Zuführabschnitt **100** und eine Übergangsöffnung **120** zum Überführen der Schraube vom Zuführabschnitt **100** in das Mundstück **200,** wobei die Schraube entlang der Längsachse **LA** in Richtung einer Zuführrichtung **ZR** in den Zuführabschnitt **100** über die Einführöffnung **110** einführbar ist. Die Übergangsöffnung **120** ist dabei im Wesentlichen kreisförmig.

Der Zuführabschnitt **100** und das Mundstück **200** schließen dabei entlang der Längsachse **LA** der Kollisionsschutzhülle **10** unmittelbar aneinander und bilden die Kollisionsschutzhülle 10, welche einstückig hergestellt ist.

Das Mundstück **200** ist durch elastische Zungen **210** gebildet, die am Umfang der Übergangsöffnung **120** des Zuführabschnitts **100** angeordnet sind und sich entlang der Längsachse **LA** der Kollissionsschutzhülle **10** in Richtung Zuführrichtung **ZR** erstrecken, wie in **Fig. 1** sowie **Fig. 2** zu entnehmen ist. Ferner bilden die elastischen Zungen **210** einen Hohlraum, in welche die Schraube einführbar ist, wobei sich der Hohlraum ausgehend von der Übergangsöffnung **120** entlang der Längsachse **LA** in Richtung der Zuführrichtung **ZR** verjüngt, sodass ein Schraubkopf der Schraube von den elastischen Zungen **210** federnd gehalten werden kann.

Die elastischen Zungen **210** sind eingerichtet, sich beim Ausdrücken der Schraube in Richtung der Zuführrichtung ZR aus dem Mundstück **200** derart quer zur Zuführrichtung **ZR** elastisch zu verformen, dass die Schraube freigegeben werden kann und die elastischen Zungen **210** anschließend in ihre Ursprungsposition zurückkehren.

Die elastischen Zungen **210** sind ferner eingerichtet, sich bei einer äußeren Krafteinwirkung entgegen der Zuführrichtung **K1,** und quer zur Längsachse der Kollisionsschutzhülle **K2** zu verformen, und bei Wegfallen der äußeren Krafteinwirkung **K1, K2** in ihre Ursprungsposition zurückzukehren.

Wie ebenfalls in **Fig. 1** zu sehen ist, verjüngen sich die elastischen Zungen **210** ausgehend von der Übergangsöffnung **120** und entlang der Längsachse **LA.**

Weiters sind die elastischen Zungen **210** derart ausgeformt, dass zwischen zwei benachbarten elastischen Zungen **210** ein Zwischenraum **211** gebildet ist, wobei der Zwischenraum **211** am Anschluss an dem Zuführabschnitt **100** im Wesentlichen eine kreisförmige Öffnung aufweist, welche in Richtung Zuführrichtung **ZR** in einen Spalt mündet, welcher sich bis zum Ende des Mundstücks fortsetzt.

**Fig. 3** zeigt die beispielhafte Kollisionsschutzhülle **10** aus Fig. 1 und **Fig. 2** in einer stirnseitigen Ansicht entgegen der Zuführrichtung **ZR,** wobei zu erkennen ist, dass sich der Spalt des Zwischenraums **211** zwischen den einzelnen elastischen Zungen **210** bis zum Ende des Mundstücks fortsetzt und die elastischen Zungen voneinander trennt.

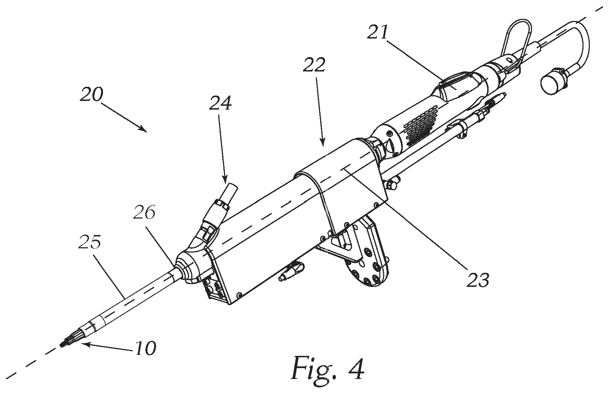

**Fig. 4** zeigt ein beispielhaftes Werkzeug **20** in Form eines Zuführschrauberwerkzeugs. Das Werkzeug **20** weist einen Werkzeugantrieb **21** mit einer verdrehgesicherten Antriebswelle **22** auf, wobei die Achsenrichtung **23** der Antriebswelle **22** auch der Achsenrichtung **23** des Werkzeuggehäuse bzw. der Einhausung des Werkzeugs entspricht. Das Werkzeuggehäuse weist einen Roboterflansch auf, der zur Verbindung mit einem hier nicht dargestellten Robotergreifarm vorgesehen ist. In einem Förderschlauch **24** werden pneumatisch vereinzelte Schrauben seitlich einem Stößel **25** des Werkzeugs **20** zugeführt. Die Kollisionsschutzhülle **10** ist am Stößel **25** des Werkzeugs **20** koaxial zur Achsenrichtung **23** angeordnet. Die Kollisionsschutzhülle **10** entspricht dabei einer erfindungsgemäßen Kollisionsschutzhülle **10,** wie sie beispielsweise in den vorherigen Figuren dargestellt ist.

Die Kollisionsschutzhülle **10** ist über den Stößel **25** beweglich in Bezug zum Werkzeuggehäuse gelagert. Der Stößel kann bei einer äußeren Krafteinwirkung in axialer Richtung in das Werkzeuggehäuse bewegt werden, wobei der Stößel einen Sensor **26** aktiviert, welcher eingerichtet ist, den Roboterarm in seiner Bewegung und den Bohrvorgang bzw. Schraubvorgang zu stoppen..

Bei einem üblichen Schraubvorgang mit dem Werkzeug **20** fällt eine Schraube aus dem Förderschlauch **24** über den Stößel **25** in die Kollisionsschutzhülle **10** in Richtung der Zuführrichtung **ZR** und wird von den elastischen Zungen **210** des Mundstücks **200** in seiner Lage gehalten - dies ist in **Fig. 4** zu sehen, in welcher das Gewinde der Schraube aus der Kollisionsschutzhülle **10** hinausragt. Anschließend wird ein Werkzeugeinsatzhalter bzw. Bithalter so weit in Achsenrichtung **23** nach unten gefahren, bis der Bithalter in den Schraubenkopf der Schraube eingreift (nicht dargestellt) und die Schraube in Zuführrichtung ZR aus der Kollisionsschutzhülle **10** hinausdrückt, wobei sich die elastischen Zungen 210 derart verformen (wie bereits zuvor ausgeführt), dass die Schraube aus der Kollisionsschutzhülle **10** freigegeben wird.

### LISTE DER BEZUGSZEICHEN

| | |
|---|---|
| Kollisionsschutzhülle | 10 |
| Werkzeug | 20 |
| Werkzeugantrieb | 21 |
| Antriebswelle | 22 |
| Achsenrichtung | 23 |
| Förderschlauch | 24 |
| Stößel | 25 |
| Sensor | 26 |
| Zuführabschnitt | 100 |
| Einführöffnung | 110 |
| Übergangsöffnung | 120 |
| Mundstück | 200 |
| Elastische Zunge | 210 |
| Zwischenraum | 211 |
| Krafteinwirkung in ZR | K1 |
| Krafteinwirkung quer LA | K2 |
| Längsachse | LA |
| Zuführrichtung | ZR |

## Patentansprüche

1. Kollisionsschutzhülle (10) für ein Werkzeug eines kollaborierenden Roboters, wobei die Kollisionsschutzhülle (10) vorgesehen ist, eine Schraube federnd zu halten und bei einem Ausdrücken der Schraube aus der Kollisionsschutzhülle (10) freizugeben, wobei sich die Kollisionsschutzhülle (10) entlang einer Längsachse (LA) erstreckt und Folgendes umfasst:
- ein Mundstück (200) zur federnden Halterung einer Schraube,
- einen Zuführabschnitt (100) zum Zuführen der Schraube zum Mundstück (200),
wobei der Zuführabschnitt (100) eine Einführöffnung (110) zum Einführen der Schraube in den Zuführabschnitt (100) und eine Übergangsöffnung (120) zum Überführen der Schraube vom Zuführabschnitt (100) in das Mundstück (200) umfasst, wobei die Schraube entlang der Längsachse (LA) in Richtung einer Zuführrichtung (ZR) in den Zuführabschnitt (100) über die Einführöffnung (110) einführbar ist,
wobei der Zuführabschnitt (100) und das Mundstück (200) entlang der Längsachse (LA) der Kollisionsschutzhülle (10) unmittelbar aneinander anschließen und die Kollisionsschutzhülle (10) bilden, wobei
das Mundstück (200) durch elastische Zungen (210) gebildet ist, die am Umfang der Übergangsöffnung (120) des Zuführabschnitts (100) angeordnet sind und sich entlang der Längsachse (LA) der Kollissionsschutzhülle (10) in Richtung Zuführrichtung (ZR) erstrecken, wobei die elastischen Zungen (210) eingerichtet sind, sich beim Ausdrücken der Schraube in Richtung der Zuführrichtung (ZR) aus dem Mundstück (200) derart elastisch zu verformen, dass die Schraube freigegeben werden kann und die elastischen Zungen (210) anschließend in ihre Ursprungsposition zurückkehren,
**dadurch gekennzeichnet, dass**
die elastischen Zungen (210) eingerichtet sind, sich bei einer äußeren Krafteinwirkung
- entgegen der Zuführrichtung (K1), und
- quer zur Längsachse der Kollisionsschutzhülle (K2)
zu verformen, und bei Wegfallen der äußeren Krafteinwirkung (K1, K2) in ihre Ursprungsposition zurückzukehren.

2. Kollisionsschutzhülle nach Anspruch 1, **dadurch gekennzeichnet, dass** die elastischen Zungen (210) sich ausgehend von der Übergangsöffnung (120) und entlang der Längsachse (LA) verjüngen.

3. Kollisionsschutzhülle nach einem der Ansprüche 1 oder 2, **dadurch gekennzeichnet, dass** die elastischen Zungen (210) einen Hohlraum bilden, in welche die Schraube einführbar ist, wobei sich der Hohlraum ausgehend von der Übergangsöffnung (120) entlang der Längsachse (LA) in Richtung der Zuführrichtung (ZR) verjüngt, sodass ein Schraubkopf der Schraube von den elastischen Zungen (210) federnd gehalten werden kann.

4. Kollisionsschutzhülle nach einem der Ansprüche 1 bis 3, **dadurch gekennzeichnet, dass** die Kollisionsschutzhülle (10) einstückig hergestellt ist.

5. Kollisionsschutzhülle nach einem der Ansprüche 1 bis 4, **dadurch gekennzeichnet, dass** die Übergangsöffnung (120) im Wesentlichen kreisförmig ist.

6. Kollisionsschutzhülle nach einem der Ansprüche 1 bis 5, **dadurch gekennzeichnet, dass** die elastischen Zungen (210) sich beim Ausdrücken der Schraube in Richtung der Zuführrichtung (ZR) aus dem Mundstück (200) derart quer zur Zuführrichtung (ZR) elastisch zu verformen, dass die Schraube freigegeben werden kann und die elastischen Zungen (210) anschließend in ihre Ursprungsposition zurückkehren.

7. Kollisionsschutzhülle nach einem der Ansprüche 1 bis 6, **dadurch gekennzeichnet, dass** die elastischen Zungen (210) derart ausgeformt sind, dass zwischen zwei benachbarten elastischen Zungen (210) ein Zwischenraum (211) gebildet ist, wobei der Zwischenraum (211) am Anschluss an dem Zuführabschnitt (100) im Wesentlichen eine kreisförmige Öffnung aufweist, welche in Richtung Zuführrichtung (ZR) in einen Spalt mündet.

8. Werkzeug für einen kollaborierenden Roboter, umfassend zumindest eine Kollisionsschutzhülle (10) gemäß einem der Ansprüche 1 bis 7.

## Claims

1. Collision protection cover (10) for a tool of a collaborative robot, wherein the collision protection cover (10) is designed to hold a screw resiliently and to release it when the screw is pushed out of the collision protection cover (10), wherein the collision protection cover (10) extends along a longitudinal axis (LA) and comprises:
- a mouthpiece (200) for resiliently holding a screw,
- a feed section (100) for feeding the screw to the mouthpiece (200), wherein the feed section (100) comprises an insertion opening (110) for inserting the screw into the feed section (100) and a transition opening (120) for transferring the screw from the feed section (100) into the mouthpiece (200), wherein the screw can be inserted along the longitudinal axis (LA) in the direction of a feed direction (ZR) into the feed section (100) via the insertion opening (110),
wherein the feed section (100) and the mouthpiece (200) are directly connected to each other along the longitudinal axis (LA) of the collision protection cover (10) and form the collision protection cover (10), wherein
the mouthpiece (200) is formed by elastic tongues (210) which are arranged at the circumference of the transition opening (120) of the feed section (100) and extend along the longitudinal axis (LA) of the collision protection cover (10) in the direction of feed (ZR), wherein the elastic tongues (210) are designed to deform elastically out of the mouthpiece (200) in the direction of feed (ZR) when the screw is pushed out, so that the screw can be released and the elastic tongues (210) then return to their original position,
**characterized in that**
the elastic tongues (210) are designed to deform when an external force is applied
- against the feed direction (K1), and
- transversely to the longitudinal axis of the collision protection cover (K2),
and to return to their original position when the external force (K1, K2) is removed.

2. Collision protection cover according to claim 1, **characterized in that** the elastic tongues (210) taper starting from the transition opening (120) and along the longitudinal axis (LA).

3. Collision protection cover according to one of claims 1 or 2, **characterized in that** the elastic tongues (210) form a cavity into which the screw can be inserted, wherein the cavity tapers from the transition opening (120) along the longitudinal axis (LA) in the direction of feed (ZR) so that a screw head of the screw can be held resiliently by the elastic tongues (210).

4. Collision protection cover according to one of claims 1 to 3, **characterized in that** the collision protection cover (10) is manufactured in one piece.

5. Collision protection cover according to one of claims 1 to 4, **characterized in that** the transition opening (120) is essentially circular.

6. Collision protection cover according to one of claims 1 to 5, **characterized in that** the elastic tongues (210) are elastically deformed transversely to the feed direction (ZR) when the screw is pressed out of the mouthpiece (200) in such a way that the screw can be released and the elastic tongues (210) then return to their original position.

7. Collision protection cover according to one of claims 1 to 6, **characterized in that** the elastic tongues (210) are shaped in such a way that a gap (211) is formed between two adjacent elastic tongues (210), wherein the gap (211) at the connection to the feed section (100) has essentially a circular opening which opens into a gap in the feed direction (ZR).

8. Tool for a collaborative robot, comprising at least one collision protection cover (10) according to one of claims 1 to 7.

## Revendications

1. Enveloppe anti-collision (10) pour un outil d'un robot collaboratif, la gaine anti-collision (10) étant prévue pour maintenir une vis de manière élastique et pour la libérer lorsqu'elle est poussée hors de la gaine anti-collision (10), la gaine anti-collision (10) s'étendant le long d'un axe longitudinal (LA) et comprend :
- une embouchure (200) pour maintenir de manière élastique une vis,
- une section d'alimentation (100) pour alimenter la vis vers l'embouchure (200), la section d'alimentation (100) comprenant une ouverture d'insertion (110) pour insérer la vis dans la section d'alimentation (100) et une ouverture de transition (120) pour transférer la vis de la section d'alimentation (100) vers l'embouchure (200), la vis pouvant être introduite le long de l'axe longitudinal (LA) dans le sens d'une direction d'alimentation (ZR) dans la section d'alimentation (100) via l'ouverture d'introduction (110),
la section d'alimentation (100) et l'embout (200) étant directement reliés l'un à l'autre le long de l'axe longitudinal (LA) de la coque de protection anti-collision (10) et formant la coque de protection anti-collision (10),
l'embout (200) est formée par des languettes élastiques (210) qui sont disposées à la périphérie de l'ouverture de transition (120) de la section d'alimentation (100) et s'étendent le long de l'axe longitudinal (LA) de la gaine de protection contre les collisions (10) dans le sens de l'alimentation (ZR), les languettes élastiques (210) sont conçues pour se déformer élastiquement lors de l'expulsion de la vis dans le sens de l'alimentation (ZR) hors de l'embouchure (200) de telle sorte que la vis puisse être libérée et que les languettes élastiques (210) reviennent ensuite dans leur position d'origine,
**caractérisé en ce que**
les languettes élastiques (210) sont conçues pour se déformer sous l'effet d'une force extérieure
- dans le sens opposé au sens d'alimentation (K1) et
- transversalement à l'axe longitudinal de la coque de protection anti-collision (K2)
et pour revenir à leur position d'origine lorsque la force extérieure (K1, K2) cesse d'agir.

2. Enveloppe de protection anti-collision selon la revendication 1, **caractérisée en ce que** les languettes élastiques (210) se rétrécissent à partir de l'ouverture de transition (120) et le long de l'axe longitudinal (LA).

3. Enveloppe de protection anti-collision selon l'une des revendications 1 ou 2, **caractérisée en ce que** les languettes élastiques (210) forment une cavité dans laquelle la vis peut être insérée, la cavité se rétrécissant à partir de l'ouverture de transition (120) le long de l'axe longitudinal (LA) dans le sens de l'alimentation (ZR), de sorte qu'une tête de vis peut être maintenue de manière élastique par les languettes élastiques (210).

4. Enveloppe de protection anti-collision selon l'une des revendications 1 à 3, **caractérisée en ce que** l'enveloppe de protection anti-collision (10) est fabriquée d'un seul tenant.

5. Enveloppe de protection anti-collision selon l'une des revendications 1 à 4, **caractérisée en ce que** l'ouverture de transition (120) est essentiellement circulaire.

6. Enveloppe de protection anti-collision selon l'une des revendications 1 à 5, **caractérisée en ce que** les languettes élastiques (210) se déforment élastiquement transversalement à la direction d'alimentation (ZR) lors de l'expulsion de la vis dans la direction d'alimentation (ZR) à partir de l'embout (200) de manière transversale par rapport à la direction d'alimentation (ZR) de telle sorte que la vis puisse être libérée et que les languettes élastiques (210) reviennent ensuite dans leur position d'origine.

7. Enveloppe de protection anti-collision selon l'une des revendications 1 à 6, **caractérisée en ce que** les languettes élastiques (210) sont formées de telle sorte qu'un espace intermédiaire (211) est formé entre deux languettes élastiques voisines (210), l'espace intermédiaire (211) présentant, au niveau de la jonction avec la section d'alimentation (100), débouche dans une fente dans la direction d'alimentation (ZR).

8. Outil pour un robot collaboratif, comprenant au moins une enveloppe de protection anti-collision (10) selon l'une des revendications 1 à 7.
